# EUROPEAN PATENT APPLICATION

(11) **EP 3 789 796 A1**
(43) Date of publication of application: **10.03.2021**
(21) Application number: 20189088.6
(22) Date of filing: 03.08.2020
(51) Int. Cl.: G01S 19/33, G01S 19/32, G01S 19/35, G01S 19/37

(54) **A FLEXIBLE DEVICE FOR SYNCHRONIZING MULTI-ANTENNA GNSS MEASUREMENTS**

(30) Priority: 19.08.2019 US 201962889012 P; 12.05.2020 US 202015930020
(71) Applicant: Beijing Unistrong Science & Technology Co., Ltd., Beijing 100176 (CN)
(72) Inventor: GOU, Xinping, Beijing, 100176 (CN); MILLER, Steve, Scottsdale, AZ Arizona 85259 (US); WHITEHEAD, Michael, Scottsdale, AZ Arizona 85260 (US); RADER, Richard Frederic, Scottsdale, AZ Arizona 85259 (US); BADKE, Bradley Paul, Chandler, AZ Arizona 85226 (US)
(74) Representative: Kuhnen & Wacker Patent- und Rechtsanwaltsbüro PartG mbB

(57) **Abstract**

Disclosed is a system and method for receiving and processing a plurality of GNSS signals in a geo-location application to determine location, orientation and/or motion characteristics of a body on which the GNSS signal processing system is located. The system and method provide for precise synchronization of measurements of various signals and data associated with the GNSS signal processing system (including GPS systems), and provide for flexible configuration and allocation of resources used to receive and process GNSS signals to minimize power consumption and maximize efficiency and accuracy of the GNSS signal processing system. The flexibility of the system and method further provide for the scaling of one hardware system to address situations in which more or fewer antennas are employed, in which more or fewer data processing paths are needed, and in which the system is employed to determine various combinations of location, orientation, and motion characteristics.

## Description

### CROSS REFERENCE TO RELATED APPLICATION

This application claims priority to U.S. Provisional Patent Application entitled "A Flexible Device for Synchronizing Multi-Antenna GNSS Measurements," serial number 62889012, filed August 19, 2019, the disclosure of which is hereby incorporated entirely herein by reference.

### BACKGROUND OF THE INVENTION

### Technical Field

This invention relates generally to Global Navigation Satellite System (GNSS) direct sequence spread spectrum receivers, and more specifically, to a method and an apparatus for synchronizing the precise time of measurements occurring on a receiver of a geo-location system including, but not limited to, Global Positioning Systems (GPS).

### State of the Art

Global Navigation Satellite Systems are in widespread use to determine the location and/or attitude of a body. A GNSS includes a network of satellites that broadcast GNSS radio signals. GNSS signals allow a user to determine the location of a receiving antenna, the time of signal reception and/or the attitude of a body that has a pair of receiving antennae fixed to it. Location is determined by receiving GNSS signals from multiple satellites in known positions, determining the transmission time for each of the signals, and solving for the position of the receiving antenna based on the known data. In GNSS Attitude or Heading systems, it is necessary to measure GNSS signals arriving at multiple antennae, with known placement relative to each other, and then process these measurements to derive heading or attitude.

It will be appreciated that the satellite systems as discussed herein may include, but are not be limited to, the Navstar Global Positioning System (GPS), established by the United States; Global Orbiting Navigation Satellite System (GLONASS), established by the Russian Federation; the BeiDou Navigation Satellite System (BDS) created by China; and Galileo, created by the European Community. GPS is the original GNSS system and all others are similar in concept to GPS. Each GNSS satellite broadcasts signals where a spreading code, and possibly data, are modulated on a carrier. The methods and systems disclosed herein may be applicable to any geo-location system and geo-location satellite signals.

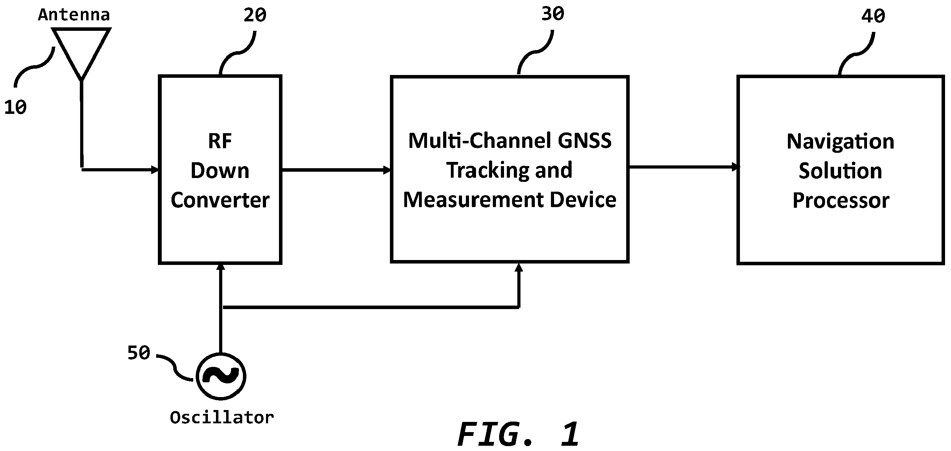

Figure 1 depicts a simplified block diagram of a GNSS receiver consisting of an antenna 10, an RF down converter 20, a multi-channel GNSS tracking and measurement device 30, also called a baseband processor, and a navigation solution processor 40. An oscillator 50 provides the timing reference. The RF down converter 20 translates a GNSS frequency to a lower frequency suitable for digital processing within the baseband processor 30. The baseband processor 30 tracks the GNSS signals and passes measurements to the navigation processor 40 that performs the location solution. Historically, the baseband processor 30 tracked one or two frequencies of GPS.

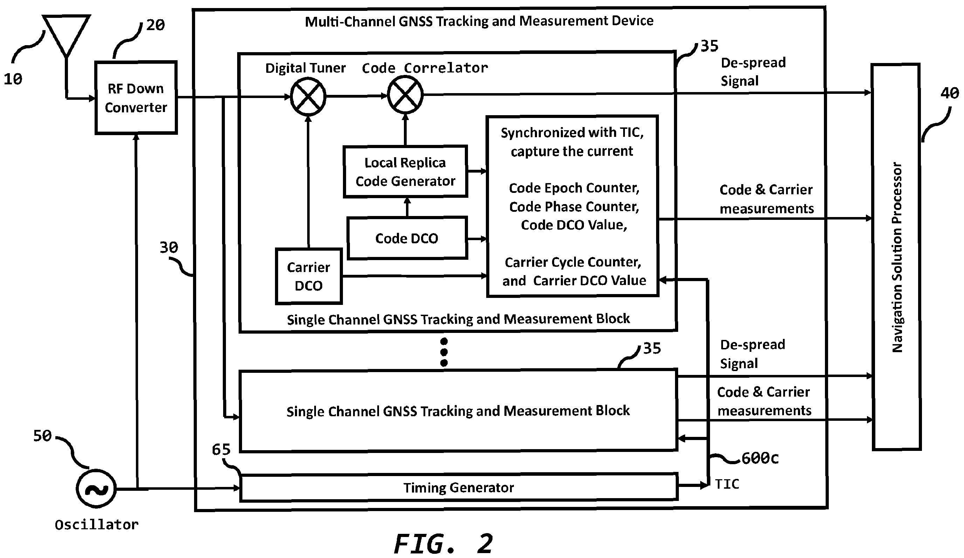

The baseband processor 30 consists of a plurality of GNSS tracking and measurement channels, one channel for each broadcast GNSS signal. Figure 2 shows a simplified diagram of a multi-channel GNSS tracking device 30 consisting of one or more single channel GNSS tracking and measurement blocks 35 and a timing generator block 65. Each channel tracks the code and carrier phase of a broadcast signal by forming replicas of these code and carrier components. The receiver aligns these replicas with the incoming signal from the RF down converter 20. The alignment involves correlating the arriving signal with the replica, forming a discriminator to measure misalignment, and then using a track loop, fed by the discriminator, to keep the phase of the replica aligned with the actual phase of the incoming signal. After timing alignment, the underlying GNSS data signal can be processed from the de-spread signal. This underlying data signal contains, among other things, information about the clocks and ephemeris of the GNSS satellites.

Samples of the code and carrier phases are captured at time intervals defined by the receiver measurement clock, called TIC 600c, within the timing generator 65. These measurements are samples of the replica code and carrier phase, which includes Code DCO value, Code Phase Counter, Code Epoch Counter, Carrier DCO value and Carrier Cycle Counter. The time of signal transmission from the satellite is implicit in its code phase (with code phase ambiguities resolved with the addition of other data that may be sent in a navigation message). A pseudo-range to the satellite is computed within the navigation solution processor 40 by differencing the receiver time of reception with the satellite time of broadcast. The pseudo-range consist of the signal travel time due to geometric distance between satellite and GNSS receiver antenna, plus receiver and satellite clock offsets, and other effects to travel-time such as those due to atmospheric effects of troposphere and ionosphere.

Differencing pseudo-ranges, or carrier phase derived ranges measured at two different GNSS receivers can cancel certain effects. This is especially true if the receivers are geometrically close. For example, satellite clock errors are common to both receivers, so these cancel in the difference. Errors in the satellites broadcast location also cancel to a large degree when the line-of-sight angles to the satellites are similar, as they would be in closely spaced receivers. Atmospheric induced errors (or delays) also cancel to a large degree for receivers in the same vicinity.

Unfortunately, receiver clock error is different for two different receivers, and thus does not cancel. Double differences can be employed, where phase observations from a common satellite are differenced form the phase observations of other satellites. But this is not always desirable, since any error in the observations from the common satellite due to effects such as multipath, and receiver noise do not cancel, and thus can corrupt all the double difference observations which make use of the common satellite.

Rather than form double differences, single difference can suffice and may be preferred. The clock error between the two receivers can be estimated as part of the navigation or attitude solution. If both receivers share a common oscillator, this clock error will be nearly constant, changing slowly possibly due to temperature effects on RF components, specifically group delays. This will have the benefit of strengthening the attitude solution by reducing an unknown clock-term in the solution. Fewer observations would then be needed to compute the solution, which is advantageous when many signals are blocked.

Even though GNSS receivers share a common oscillator, the receiver clock error difference term may change if the sampling of code and phase measurement observations is not kept perfectly synchronized. An ideal attitude system would keep perfectly synchronized observations across antennae to avoid having to compensate for platform dynamics of the attitude system.

Patent No.: US7292186B2, "Method and system for synchronizing multiple tracking devices for a geo-location system" describes a method to precisely sample two GNSS receiver devices sharing a common oscillator at the same time instant. This patent is incorporated herein by reference.

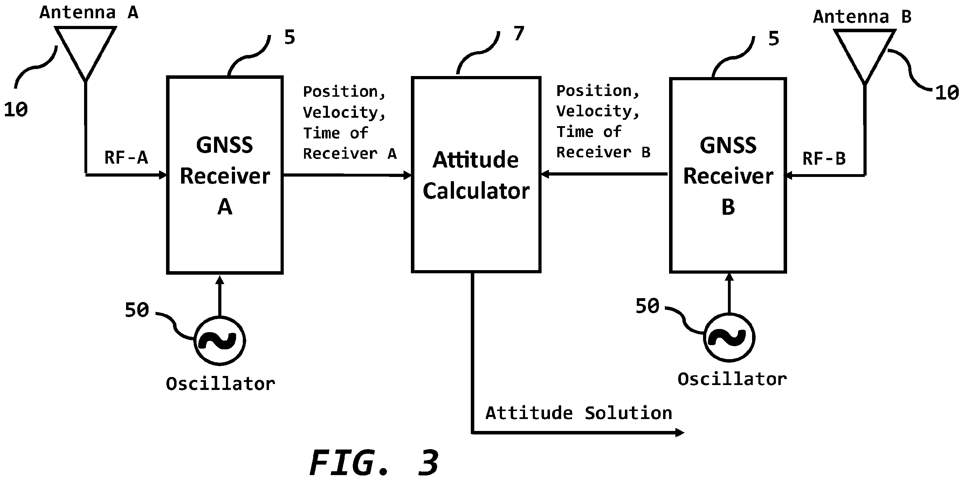

Various approaches have been taken to build a device from which heading or attitude can be derived using GNSS measurements. One approach is to use multiple GNSS receiver systems to independently collect measurements at each antenna. The measurements are then processed to determine the antenna's relative locations (with respect to one another), which then gives the orientation of the rigid body to which the antennae are attached. The use of multiple receivers is straightforward but has the drawback that the approach is likely to be bulky and costly. Also, such a system has independent oscillators at each GNSS receiver, so that it is not possible to assume any prior knowledge of clock difference terms. Figure 3 is an example of a 2-D attitude system with independent receivers, each using independent oscillators.

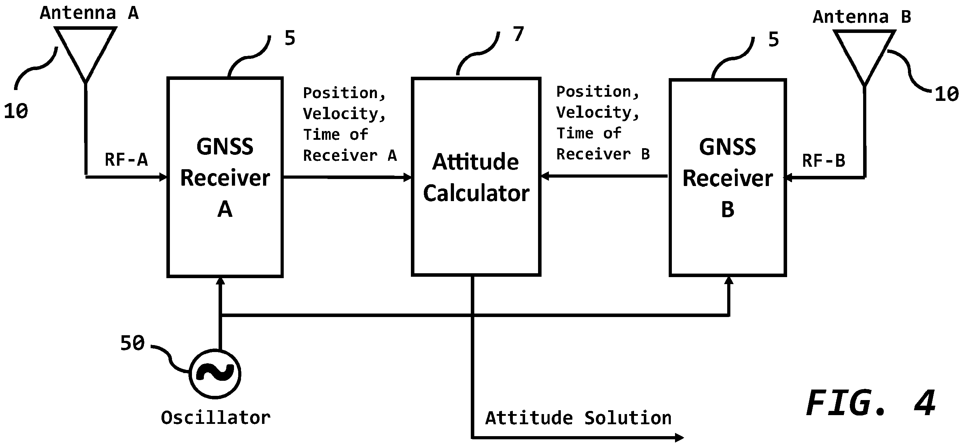

Another approach is to build hardware specifically for computing attitude. The device may contain multiple RF down converters, and multiple tracking devices, at least one per antenna. The RF and tracking devices would typically share a common oscillator. Figure 4 is an example of an attitude system with independent receivers using a common oscillator, but still having unsynchronized measurement clocks.

The method of Figure 4 has the advantage of a shared oscillator, which makes processing easier. When deriving the final carrier phase of the satellite signal, it is necessary to account for down conversion local oscillator (LO) frequencies which must be added to the cycle count of the down converted signal. But since the attitude system involves the difference in carrier phase, measured at two or more antennae, digital and analog LO frequencies will cancel if derived from the same oscillator.

Even though the approach depicted in Figure 4 uses a shared oscillator for tracking the signals at the various antennae, there is no guarantee that measurements of code and carrier phase will be taken at the same time (or TIC of the oscillator).

The system of US7292186B2, shown in Figures 5 and 6, solves the sampling time issue by synchronizing samples taken for code and carrier phases measured at each antenna. This is advantageous since it avoids accounting for platform attitude change between samples taken at different times. It also assures the receiver clock portion of the code and carrier phase remains stable, and predictable. In fact, the receiver portion is reduced to just a bias due to differences in cable delays from antenna to receiver, and any differences in group delays in the various RF components (such as filters) on the different RF paths emanating from each antenna.

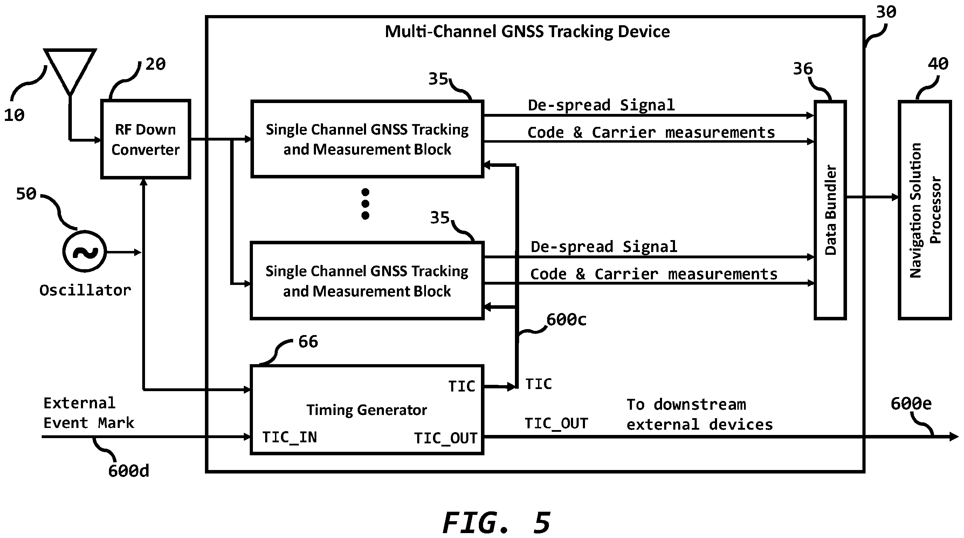

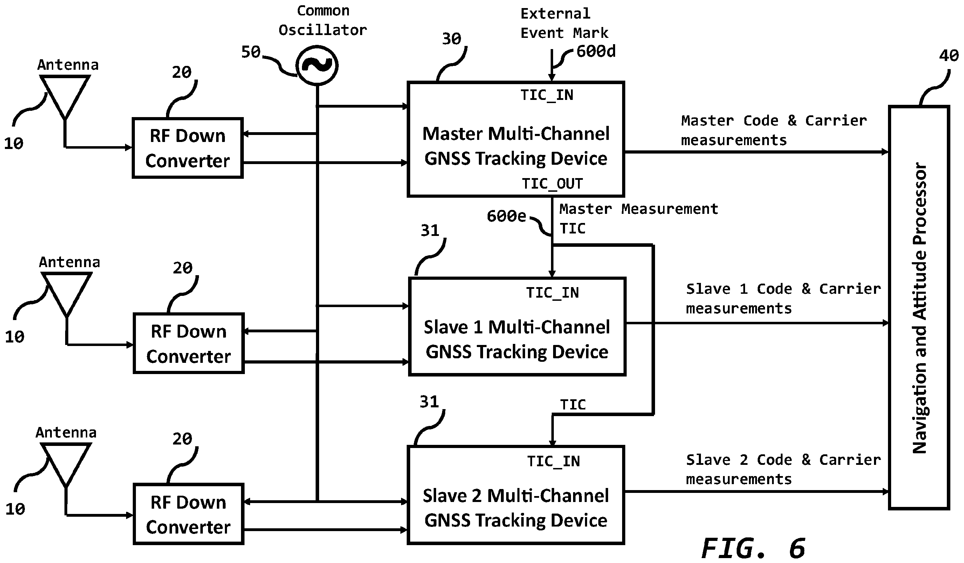

The multi-channel GNSS tracking and measurement device 30, shown in Figure 5, functions as a master when the Timing Generator 66 generates the TIC 600c and TIC_OUT 600e signals. The purpose of the TIC 600c in Figure 5 is to simultaneously latch measurement data of all single channel GNSS tracking and measurement blocks 35 contained within 30. When the TIC occurs, measurement data is captured by the GNSS and then sent to the Navigation and Attitude Processor 40 where a position and possibly an attitude is computed. The period between TICs 600c is programmable and is often adjusted such that once each second a TIC will align with the GNSS receiver's estimate of true time, Universal Coordinate Time (UTC), producing a one pulse per second (1PPS) output. A TIC is a periodic event counter, related to the reference oscillator 50, that is programmed into the hardware. The TIC_OUT 600e occurs one clock early with respect to the TIC 600c. The TIC_OUT 600e from the master Multi-channel GNSS Tracking device 30 is then connected to the TIC_IN 600d of other Multi-channel GNSS Tracking devices 31, called Slaves. This Master 30 and Slave 31 configuration is shown in Figure 6. Each slave device clocks the TIC_IN signal, using its sample clock, and distributes this as its TIC. This distribution of TIC_OUT 600e to multiple GNSS devices guarantees concurrent sampling of measurements at all antennae across all devices. The master can turn off its TIC_OUT when not connected to a slave device.

When a device uses an externally generated TIC, that tracking device is referred to as a slave tracking device 31, while the tracking device generating the TIC 600c is referred to as a master tracking device 30. Each tracking device can be configurable to act either as a master (generating a TIC internally) 30, or as a slave 31(reacting to an externally generated TIC), or as both in a master 30 with mark 600d as shown in Figure 6. In the latter, perhaps the externally generated TIC 600d is used by an application to precisely time GNSS information corresponding to some external event. For example, in aerial photography, it is desired that a GNSS location be determined simultaneously with a camera shutter opening; therefore, the master tracking device's 30 Event Mark 600d is asserted simultaneous with the camera shutter opening. The event mark is a hardware strobe that signals the GNSS receivers 30 and 31 to capture measurements at the precise instant of the strobe. This enables a GNSS position or attitude to be computed corresponding to the instant the strobe occurs.

Notwithstanding the benefits provided by the systems and methods above, it would be advantageous to provide for an attitude device that can operate with a single shared tracking device where measurement synchronization is accomplished with a single sample TIC strobe that is internal to the device. It would further be advantageous to provide for such a device such that it is flexible and can serve both as an attitude device for varying numbers of antennae, and as a single antenna positioning device. It would additionally be advantageous to provide that such a device be flexible in the allocation of tracking resources between antennae, or between signals, allowing for reduced hardware cost and power. It would further be advantageous to provide for hardware that provides the system designer a high degree of flexibility in design of an attitude or position system. Finally, it would be advantageous to provide for a device to support a wide range of RF down converters, and even to allow for mixing of different types of down converters.

### BRIEF DESCRIPTION OF DRAWINGS

These and other features, aspects and advantages of the present invention will become better understood with regard to the following description, appended claims and accompanying drawing wherein like elements are numbered alike in the several Figures:
Figure 1 depicts a simplified block diagram of a GNSS receiver;
Figure 2 depicts a simplified block diagram of a GNSS code and carrier tracking channel within the baseband processor;
Figure 3 depicts a simplified block diagram showing a 2-D Attitude system consisting of independent receivers, each using independent oscillators;
Figure 4 depicts a simplified block diagram showing a 2-D Attitude system consisting of independent receivers using a common oscillator, but still having unsynchronized measurement clocks;
Figure 5 depicts a simplified block diagram showing a single GNSS system including a common oscillator and two measurement clocks, one used for internal measurements, and the other occurring one clock earlier to be used by external devices to generate and synchronize their measurement clocks;
Figure 6 depicts a simplified block diagram showing an attitude system consisting of a common oscillator and measurement clock;
Figure 7 depicts a simplified GNSS L1 signal map spanning 1557 MHz to 1612 MHz;
Figure 8 depicts a simplified GNSS L2 signal map spanning 1217 MHz to 1294 MHz;
Figure 9 depicts a simplified GNSS L5 signal map spanning 1166 MHz to 1217 MHz;
Figure 10 depicts a simplified block diagram of an embodiment of a positioning system utilizing one GNSS tracking device and one RF down converter that spans the entire GNSS band of L1, L2 and L5;
Figure 11 depicts a simplified block diagram of an embodiment of a 3-D attitude and positioning system utilizing one GNSS tracking device and one RF down converter that spans the GNSS L1 band;
Figure 12 depicts a simplified block diagram of an embodiment of a 2-D attitude and positioning system utilizing one GNSS tracking device and two RF down converters that span the entire GNSS band of L1, L2 and L5;
Figure 13 depicts a simplified block diagram of an embodiment of a 3-D attitude and positioning system utilizing one GNSS tracking device and two RF down converters where the full GNSS band is utilized for the position solution and a subset of frequencies are used for the attitude solution;
Figure 14 depicts a multiple antenna system of an embodiment utilizing two GNSS tracking devices;
Figure 15 depicts a more detailed, but simplified, system diagram for the embodiments depicted in Figures 10 through 13; and,
Figure 16 depicts a more detailed representation of the channelizer block shown in Figure 15.

### DETAILED DESCRIPTION OF EMBODIMENTS OF THE INVENTION

Many types of GNSS signals exist. They are transmitted by many different satellite constellations, on many different frequencies, and possibly with multiple signal formats at each frequency. Sometimes it is advantageous to employ a "greedy" strategy where the GNSS receiver will try to utilize all available GNSS signals to provide the most accurate and robust position and attitude. Sometimes it is advantageous to employ a "Quality-of-Service" (QoS) strategy where the GNSS receiver uses a subset of available signals to optimize some parameters given a list of constraints, such as optimizing position and/or attitude service given a power consumption constraint. Therefore, it is desirable for a single tracking device to have the flexibility to process a plurality of GNSS antennae, signal frequencies and formats.

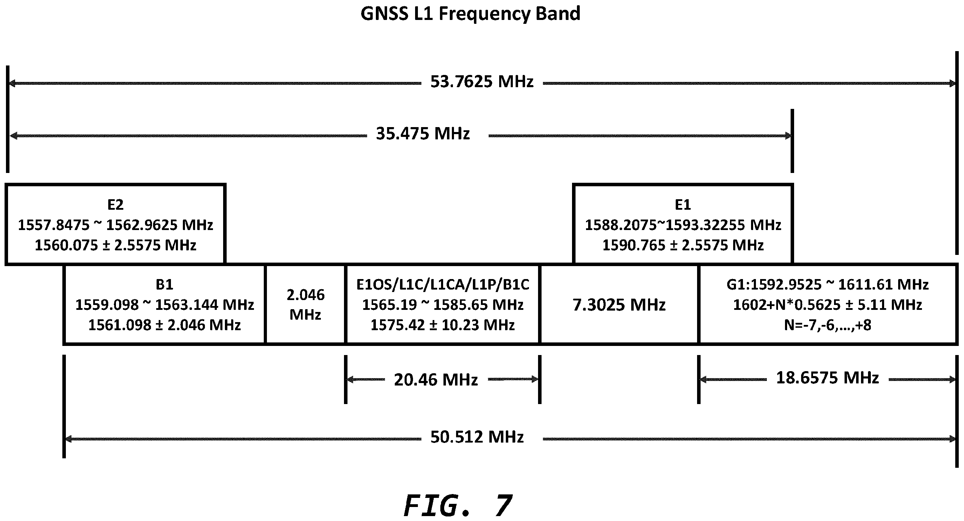

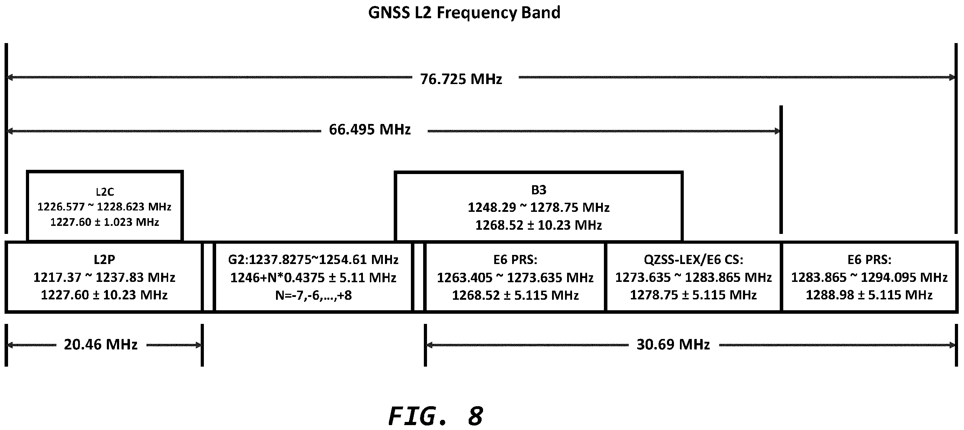

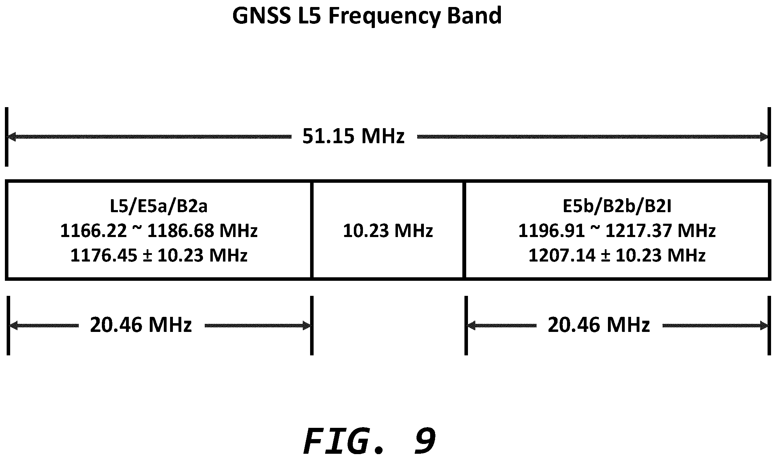

The GNSS band is approximately 1166 MHz to 1612 MHz. It may be advantageous to divide this range into three bands, GNSS L1, GNSS L2 and GNSS L5, to reduce power and cost of the RF down-onverter and baseband processor. The GNSS bands can be described as, but not limited to:
a. GNSS L1: 1557 MHz to 1612 MHz, as generally illustrated in Figure 7 ;
b. GNSS L2: 1217 MHz to 1294 MHz, as generally illustrated in Figure 8 ; and,
c. GNSS L5: 1166 MHz to 1217 MHz, as generally illustrated in Figure 9 .

Note that GNSS L2 and L5 frequency bands are adjacent and maybe processed as one band. Sometimes GNSS L2 and L5 are referred to as Upper L2 (UL2) and Lower L2 (LL2), respectively. The individual GNSS signal bandwidths are set by the associated satellite transmitter and may be reduced at the receiver to trade-off code tracking resolution, signal-to-noise ratio and power consumption.

Note that GPS, Galileo and Beidou all transmit on GNSS L1 at 1575.42MHz and GNSS L5 at 1176.45 MHz. Tracking at either of these frequencies maximizes the number of visible satellites given a single frequency. This is advantageous when the sky is occluded by buildings or trees, but the receiver has a constraint to minimizing power consumption. A higher-accuracy and higher-power receiver may use both frequencies. A "greedy" receiver may use all, or most, of the available signals in GNSS L1, L2 and L5.

It is advantageous for GNSS receivers to provide centimeter-level positioning accuracy without being connected to a reference network. This is enabled via global GNSS correction services which distribute precise GNSS satellite orbits and clocks, as well as atmospheric modeling data. The data can be globally distributed via satellites, which typically transmit the correction data between 1525 MHz to 1560 MHz. For historical reasons, this frequency band is referred to as LBand.

It should be appreciated that the present invention is flexible and can serve both as an attitude device for varying numbers of antennae, and as a single antenna positioning device. It is also flexible in the allocation of tracking resources among antennae, or between signals, allowing for reduced ASIC gate count and power consumption.

It is important to note that, as used in this application, the terms "configurable" and "programmable" mean the features are enabled or disabled via software and do not require a change to the circuit board.

In one embodiment, to support a wide range of use cases, an RF down converter includes a plurality of similar down conversion paths, each with an RF input, programmable local oscillator and programmable bandwidth lowpass filter, such that any channel can be programmed to process any of the GNSS L1, L2 and L5 bands. This enables a single RF down converter to process a plurality of antennae and GNSS frequency bands.

In an embodiment, to support a wide range of use cases, the GNSS tracking and measurement device includes a plurality of wide-bandwidth, high speed analog to digital converters (ADCs). Since wider bandwidths require a higher sampling rate, the GNSS device supports complex analog signals to minimizes the sampling rate and power. In one embodiment, the GNSS device has at least eight (8) complex internal ADCs such that only one GNSS device is required in a multi-frequency, 2D or 3D attitude system. This integration enables a common oscillator, common sample clock and common measurement TIC to process all signals from all antennae.

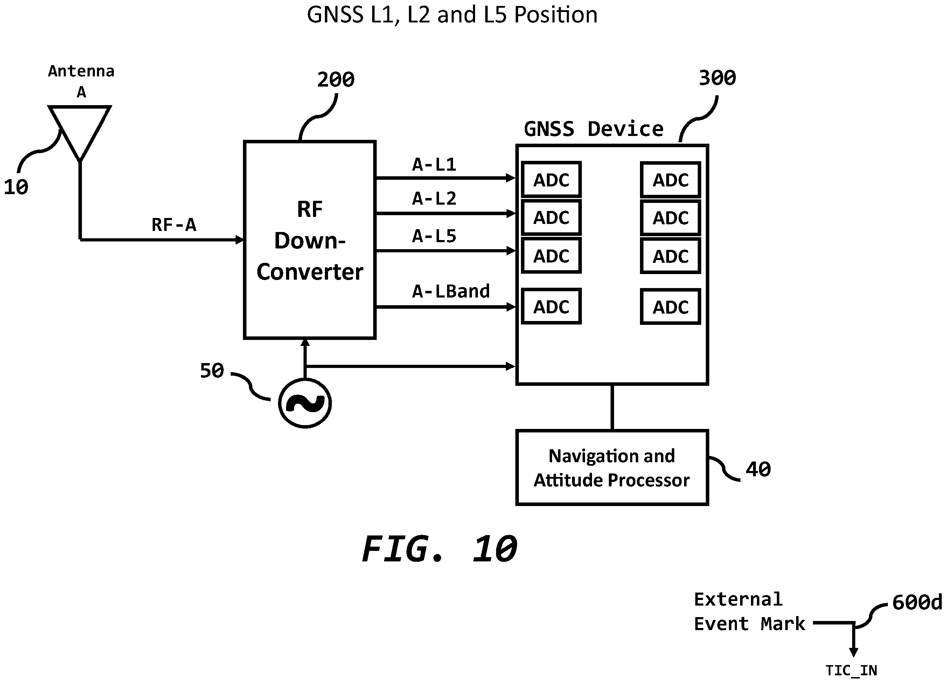

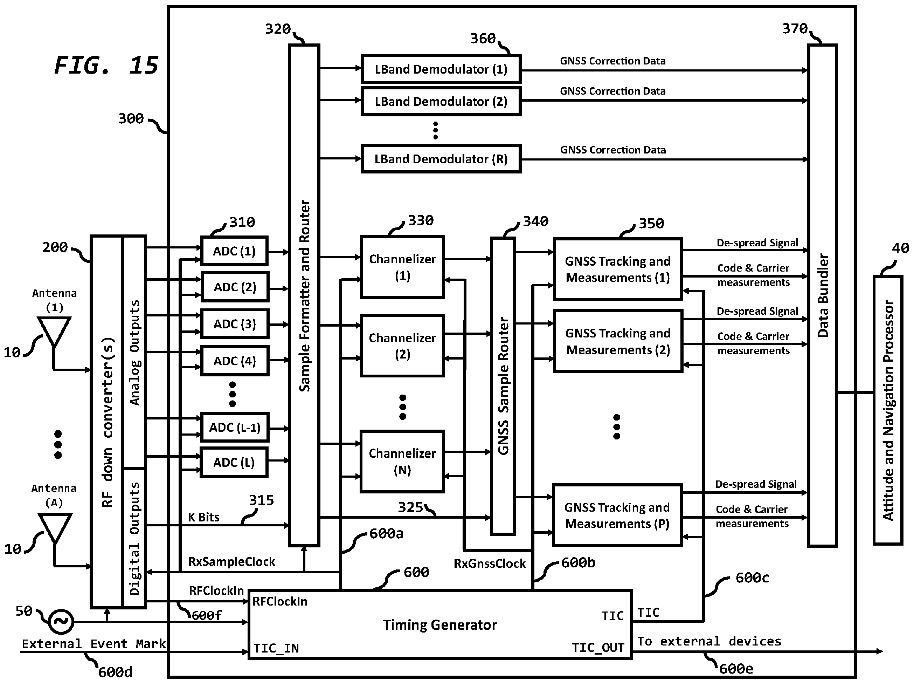

One embodiment is a single-antenna, multi-frequency receiver as shown in Figure 10. In this embodiment, a single antenna 10 is connected to an RF down converter 200. The RF down converter 200 splits the RF-A antenna signal into GNSS L1, L2, L5, and LBand, and outputs the down converted complex analog signals A-L1, A-L2, A-L5, and A-LBand, respectively. These down converted analog signals are then digitized by the GNSS device 300 where each individual GNSS signal is tracked. Code and carrier measurements for every signal are captured simultaneously on the TIC 600c, as shown in Figure 15. When the TIC occurs, measurement data is captured by the GNSS device 300 and then sent to the Navigation and Attitude Processor 40, where a position is computed. A common oscillator 50 drives both the RF down converter and the GNSS device. This embodiment includes 8 ADCs, which are paired to process the 4 wideband complex analog signals. Paths can be shut down or disabled via software to save power, such as A-L2 and A-L5, or just A-L2.

It is important to note that "wideband" means the entire GNSS L1 band can be processed as one complex analog signal; the entire GNSS L2 band can be processed as one complex analog signal; and the entire GNSS L5 band can be processed as one complex analog signal. In other words, the ADCs have the appropriate analog bandwidth and maximum sample rate to process them. Processing of combined GNSS L2 and GNSS L5 as one complex analog signal is also possible.

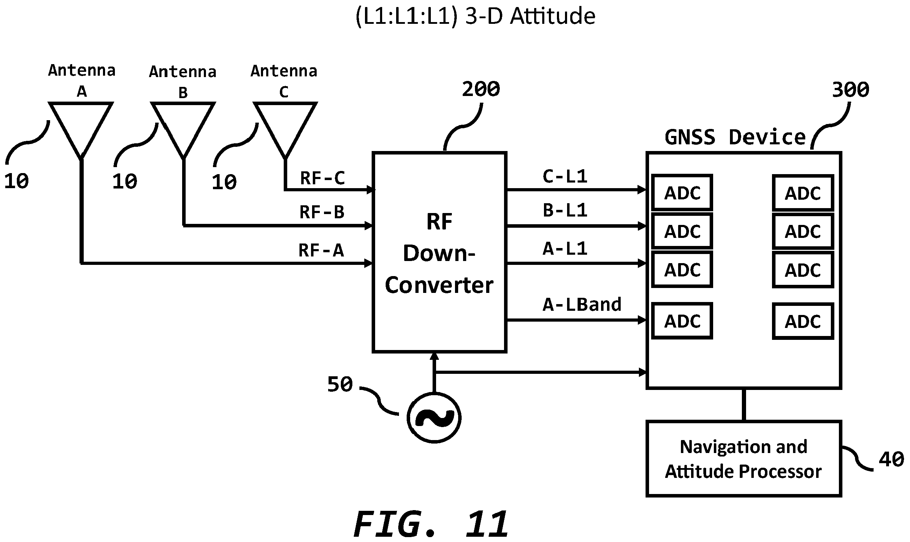

Another embodiment is a single frequency, 3D attitude and positioning system utilizing one RF down converter and one GNSS device as shown in Figure 11. In this embodiment, three antennae 10 are connected to an RF down converter 200. The RF down converter 200 takes the three antenna signals, RF-A, RF-B and RF-C and outputs the down converted complex analog L1 signals associated with each antenna, A-L1, B-L1 and C-L1 and A-LBand respectively. These down converted analog signals are then digitized by the GNSS device 300, where each L1 signal is tracked and measurements collected. All measurements across all antennae are captured simultaneously on the TIC 600c. These measurements are used by the processor 40 to form a GNSS L1 based 3-D attitude solution. A common oscillator 50 drives both the RF down converter and the GNSS device. This embodiment utilizes 8 ADCs, which are paired to process 4 complex analog paths.

Additional embodiments may utilize a plurality of RF down converters and one GNSS device.

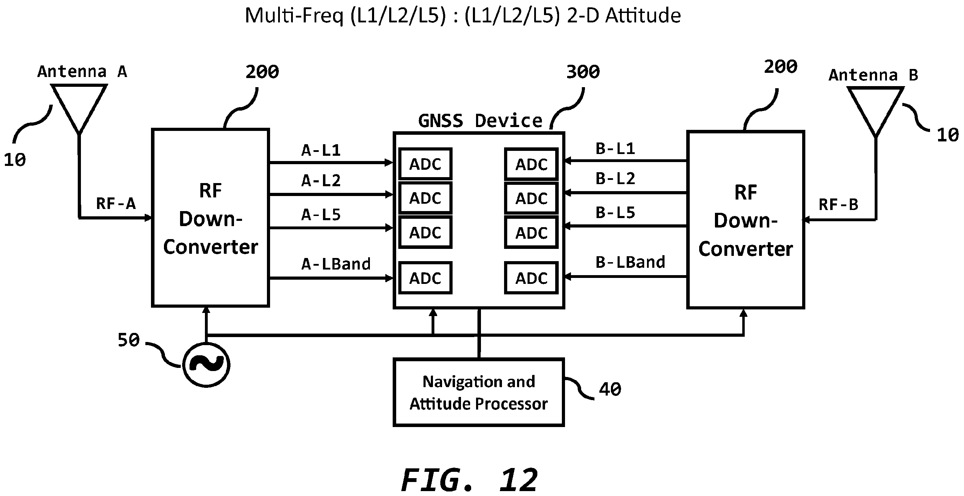

The embodiment in Figure 12 shows a multi-frequency 2-D attitude and positioning system where the full GNSS band is processed by each antenna. This system utilizes two antennae 10 and two RF down converters 200. Each RF down converter outputs four complex analog signals, corresponding to the GNSS L1, GNSS L2, GNSS L5 and the LBand frequency bands received by the connected antenna 10. Therefore, the RF down converter 200, connected to antenna A, outputs the complex analog signals A-L1, A-L2, A-L5 and A-LBand; and the RF down converter 200, connected to antenna B, outputs B-L1, B-L2, B-L5 and B-LBand. One GNSS device 300 simultaneously process these eight complex analog signals. The GNSS device 300 digitizes each analog signal and then each GNSS signal is tracked and code and carrier measurements for each signal are collected. All measurements across all antennae are captured simultaneously on the TIC 600c. These measurements are used to form a multi-frequency (L1/L2/L5) based 2-D attitude solution. A common oscillator 50 drives the two RF down converters and the GNSS device. This embodiment utilizes 16 ADCs, which are paired to process 8 complex wideband analog paths.

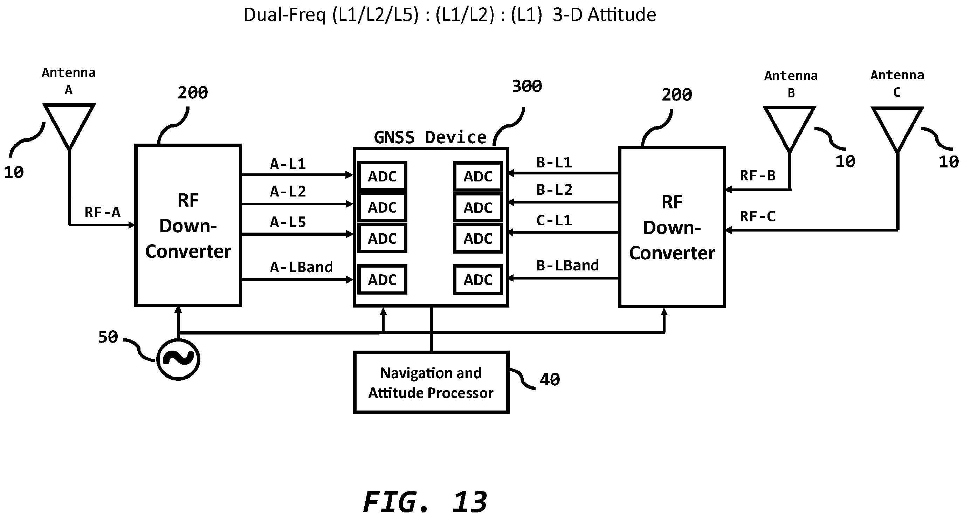

The embodiment in Figure 13 shows a 3-D attitude and positioning system where the full GNSS band is utilized for the position solution and a subset of frequencies are used for the attitude solution. All measurements across all antennae are captured simultaneously on the TIC 600c. A common oscillator 50 drives the two RF down converters and the GNSS device. This embodiment also utilizes 16 ADCs, which are paired to process 8 complex wideband analog paths.

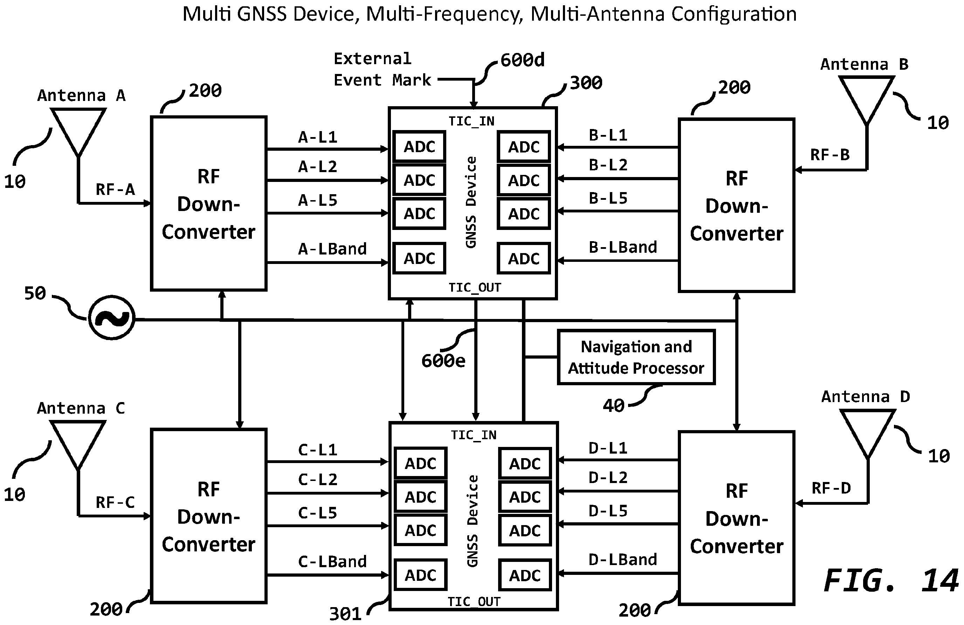

Additional embodiments utilize a plurality of RF down converters and a plurality of GNSS devices as shown in Figure 14. For these embodiments, one GNSS Device 300 is configured as the master device, or master-with-mark, and all other GNSS devices are configured as slave devices 301. The master device generates and outputs the TIC_OUT 600e, which is the TIC_IN input for all slave devices 301. The master 300 is configured as a master-with-mark when the External Event Mark 600d is connected to the master's 300 TIC_IN. External Event Mark 600d and TIC_OUT 600e are similar to the identically named signals shown in Figures 5 and 6.

The embodiments include, but are not limited to, those shown in Figures 10 through 14. A more detailed, but still simplified, block diagram of the GNSS device 300 is shown in Figure 15. The advantages of the GNSS device 300 utilized in the various embodiments include:
(a) multi-channel GNSS tracking and measurement blocks 350 where measurement synchronization is accomplished with a single measurement strobe, TIC 600c, that is internal to the device;
(b) flexible architecture that_can serve both as an attitude device for varying numbers of antennae 10, and as a single antenna positioning device;
(c) flexible allocation of tracking resources, via software only, between antennae, or between signals, allowing for reduced hardware gate count and power;
(d) flexible RF down converter interfaces, and even allow for mixing of different types of down converters; and
(e) containing enough built-in ADCs 310 to cover an attitude system.

Regarding feature (e) above, at a minimum, at least one ADC is required per antenna in the attitude system. However, there could be more than one ADC per antenna, depending on how many individual RF paths are processed from each antenna. For example, if 3 RF paths are processed comprising the L1, L2 and L5 bands of the GNSS spectrum, 3 ADCs are needed per antenna. Furthermore, referring to the immediately preceding example, 6 ADCs are needed per antenna if an In-phase and Quadrature-phase component is processed for each band.

Regarding feature (d) above, flexible RF down converter interfaces could include, for example, an interface to sample analog baseband signals from the RF device using an Analog-to-Digital converter (ADC) 310, in addition to an interface to read digital outputs 315 from a RF device making its own ADC readings. It could also support digital readings from the RF device in various formats, such as Twos-Complement format, bipolar Offset Binary, or any number of other common formats. It could also support different numbers of bits in the readings from the RF device's ADC. For example, an RF device may provide 4-bit ADC readings while another may provide 12-bit readings.

Regarding feature (c) above, flexible allocation of tracking resources could occur in a variety of ways. One example would be by maintaining a pool of general-purpose correlators that could be configured to track a wide assortment of signals. This would avoid the situation of having a fixed number of channels, each with a specific set of single-purpose correlators dedicated to specific types of signals. For example, the fixed-channel approach might employ 12 GPS channels, each with 3 correlators, one correlator for tracking L1CA signals, one for L2P Signals, and one for L5 signals. By having the pool of general-purpose correlators in the flexible channel approach, one or more of the correlators could be assigned to a channel as needed. If the channel was not allocated to a satellite for tracking, no correlators would be assigned. However, it should be appreciated that once allocated, correlators could be assigned to the channel and configured to process one or more signals that are received from the satellite allocated to that channel. The desired signals may have been chosen by the user, or determined automatically based on the application, or based on matching correction signals received from a base station.

The GNSS device 300 includes a plurality of software configurable blocks:
(a) Timing generator 600, which generates the signal processing and measurement clocks;
(b) Analog interface 310 and digital interface 315 connected to the RF down converter(s) 200;
(c) Sample router and formatter 320 that select which in-coming signal interface is formatted and routed to one or more of the channelizers 330 and LBand demodulators 360;
(d) Channelizers 330, which extract GNSS signals, at a similar carrier and bandwidth, and conditions them for subsequent down-stream processing;
(e) GNSS sample router 340 that selects which channelizer output is routed to one or more of the GNSS Tracking and Measurement block(s) 350;
(f) GNSS Tracking and Measurement block(s) 350 which track each different GNSS signal and output the de-spread signal as well as the code and carrier measurements;
(g) LBand satellite data demodulators 360, typically used to obtain precise GNSS satellite orbits and clocks along with atmospheric modelling data; and,
(h) Data bundler 370 that aggregates all data to be passed between the GNSS Device 300 and the Attitude and Navigational Processor 40.

One embodiment has an analog RF interface 310 of L=16 ADCs, a digital RF interface 315 of K=24 bits, N=25 channelizers 330, P=200 GNSS tracking and measurement blocks 350, and R=3 LBand demodulators 360. This supports a plurality of antennae and GNSS signals, including all GNSS signals for each antenna in a 2D attitude system.

### Timing Generator:

The timing generator (see Fig. 15, timing generator 600) creates the digital signal processing clocks, RxSampleClock 600a and RxGnssClock 600b. The timing generator also creates the measurement clocks, TIC 600c and TIC_OUT 600e.

The primary clock is the RxSampleClock 600a and it controls the data flow between the RF interface 200 through the Channelizer blocks 330. The RxSampleClock frequency is set by the minimum required sampling rate of the widest bandwidth signal out of the RF down converter 200. For a greedy receiver, the GNSS L2 band, with its 76.725 MHz bandwidth, will be the widest bandwidth signal out of the RF down converter. The RxSampleClock rate must be greater than 76.725 MHz to process a complex signal or greater than 153.45 MHz to process a real signal. The actual minimum frequency will depend upon the RF down converter's analog anti-aliasing filter transition and stop band characteristics. The channelizer 330 extracts signals having similar carrier frequencies and similar bandwidths for down-stream processing by the GNSS Tracking and Measurement blocks 350. As part of the channelizer signal extraction, the channelizer translates each signal to near baseband and applies a low-pass filter. This bandwidth reduction due to the low-pass filtering enables down-stream processing to be conducted at a reduced clock rate. This clock rate reduction saves power and is referred to as decimation. The timing generator 600 generates the software programmable decimation clock, RxGnssClock 600b. The minimum RxGnssClock 600b rate is dependent upon the maximum bandwidth out of the ensemble of channelizers 330. The RxGnssClock 600b is less than or equal to the RxSampleClock rate.

In a preferred embodiment, the sample rate is software configurable to support a myriad of input bandwidth use-cases. Consequently, the timing generator 600 of the preferred embodiment includes a programmable phase locked loop (PLL) that can be used to generate RxSampleClock 600a and RxGnssClock 600b. The PLL reference can be either the oscillator 50 or RFClockIn 600f. The source of the RxSampleClock is software selectable to be the oscillator 50, RFClockIn 600f, or the output of the programmable PLL.

If the RF down converter 200 outputs digital samples 315 as well as the associated sample clock, RFClockIn, then the timing generator can be software configured to utilize RFClockIn. In this case, the RxSampleClock 600a will be equal to or less than RFClockIn. The PLL can be turned off to save power.

If the RF down converter 200 outputs digital samples 315, but requires an external sample clock, then the timing generator will be software configured to output RxSampleClock 600a for this purpose. The RxSampleClock can be generated from the oscillator 50 or the PLL.

The timing generator also creates the measurement clocks, TIC 600c and TIC_OUT 600e. The TIC 600c and TIC_OUT 600e are based upon RxGnssClock 600b. The TIC_OUT 600e signal is generated one RxGnssClock earlier than TIC to give TIC_OUT one RxGnssClock period to propagate to external GNSS devices 301. The TIC will be asserted when a programmable period has elapsed or the External Event Mark 600d has been asserted. If the External Event Mark 600d is connected to the GNSS device, the device is referred to as a Master with Time Mark; otherwise, the GNSS device is referred to as a Master. For a Master with Time mark, when the External Event Mark is asserted, the timing generator will issue a TIC regardless if the programmed period between TICs has elapsed. This will enable the device to capture measurement data synchronized to an external event. A GNSS slave device is configured to accept only an external Event Mark, also called TIC_IN, and ignore the programmable period. In this configuration, a slave device's TIC will only be asserted when an upstream Master, or Master with Time Mark, asserts the TIC_OUT. The master TIC_OUT is connected to the Slave device's External Event Mark input. This ensures GNSS measurement synchronization across all antennae within a single device and across all GNSS Slave devices.

### RF Interface

Within one embodiment, the GNSS device has both an analog 310 and a digital interface 315 to support a variety of RF down converters. Both interfaces can be simultaneously active, or they can be shutdown individually to save power. Both interfaces are clocked by RxSampleClock 600a.

The analog interface 310 consists of L internal, high-speed, wide bandwidth analog to digital converters (ADCs). Wide-bandwidth ADCs reduce the total number of ADCs needed to process the entire GNSS band; reduce the pin count of both the GNSS device and the RF down converters; and reduce board EMI because high edge-rate digital signals are not routed between the GNSS device and the plurality of RF down converters. The analog interface gives the system designer the option of eliminating digital sample outputs from the RF down converter, thereby reducing the digital switching noise that can leak into the sensitive RF front-end.

In a typical embodiment, each ADC has software configurable full-scale and common mode voltage settings to optimize the ADC's effective number of bits (ENOB) over a range of analog inputs. Moreover, each ADC can operate as a 4-bit or 12-bit converter, so the system software can trade-off power consumption against the required dynamic range based upon the interference environment. The system can be configured to process any mix of real and complex signals, and unused ADCs can be individually powered down. The ADCs operate over a wide range of sample rates to minimize power by matching the sample rate to the system use-case.

One embodiment has L=16 ADCs to support a plurality of antennae and frequency bands as shown in Figures 10 through 14. This embodiment will process wideband complex signals to reduce the sampling rate and power consumption.

The digital interface 315 is a K-Bit input that is software configurable as a plurality of 2-Bit, 3-Bit, 4-Bit, 8-Bit and 12-Bit slices to support a variety of RF down converters. Each slice supports offset binary, two's compliment and Lloyd-Max encoded digital streams. The digital interface can be configured to process any mixture of real and complex sample streams. Any two slices can be paired to form a complex sample stream. Individual slices, or the entire digital interface, can be powered down when not in use. For 2-Bit and 3-Bit data streams, the channelizer block is bypassed and these streams 325 drive the GNSS Router (340 Figure 13) directly. In one embodiment, the digital interface is K=24 bits, which supports twelve 2-Bit samples; or eight 3-Bit samples, or six 4-Bit samples, or three 8-Bit samples or two 12-Bit sample streams. In one embodiment, the digital interface supports both single and double data rates.

### Sample Formatter and Router:

The sample formatter and router 320 converts the samples from 310 and 315 into a 16-Bit, two's compliment complex format and routes them to the designated channelizer. The standard format enables any combination of analog, digital, real and complex signals to be routed to any Channelizer 330 or LBand Demodulator 360. Each channelizer's input is independent, so no routing blockage exists, and each channelizer can select from all possible input streams. The Sample and Formatter 320 is clocked by the RxSampleClock 600a.

### Channelizer:

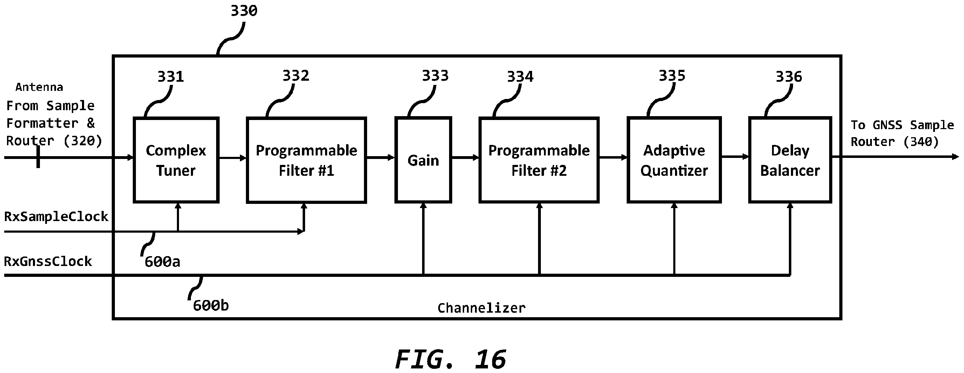

The purpose of each Channelizer 330 is to extract signals, with similar carrier frequencies and bandwidths, and condition them for subsequent down-stream processing by one or more GNSS Tracker and Measurement block(s) 350. A more detailed block diagram of the channelizer is shown in Figure 16. The processing includes: Frequency translation via the complex tuner 331; band-width matching to improve SNR and reject out-of-band interference via the programmable filter #1 332; gain stage 333 to improve down-stream dynamic range; in-band interference rejection via the programmable filter #2 334; adaptive quantization 335 to provide final gain control and reduce the down-stream processing bit-width; and finally, a delay balancer 336 so down-stream processing does not incur variations in digital processing delay given the configured options, such as filter lengths and coefficients.

Unused channelizer paths can be shutdown to reduce power.

Each RF down converter translates LBand and each GNSS band to a complex near baseband center frequency. As an example, for GNSS L1, the RF LO might be set to 1586 MHz, so the GNSS L1 band is translated to -30 MHz to +30 MHz. In this example the RF LO is outside any active GNSS frequency. The GPS 1575.42 MHz L1CA frequency is translated to +10.58 MHz = (1586 - 1575.42) MHz.

The complex tuner 331 frequency translates the Signal of Interest (SOI), contained within the in-coming sample stream, to a positive near-baseband frequency. This frequency is chosen to enable a low-pass filter response for the programmable filter 332, and to ensure that the SOI center frequency does not cross the 0 Hz axis under any doppler conditions. The complex tuner also reduces the non-orthogonality error of any down-stream, lower-resolution tuners. This path is clocked by RxSampleClock 600a. Using the GPS L1CA example, the complex tuner 331 within the channelizer path assigned to GPS L1 will be programmed to down convert the GPS L1 signal from 10.58 MHz to some small offset, say 1 MHz. The small 1 MHz offset is easily tracked out by the down-stream GNSS tracking and measurement block 350.

Within a typical embodiment, the programmable filter #1 332 will be configured as a low pass filter to optimize the SOI SNR and correlation peak detection, and to reduce out of band interference. The filter length and frequency response are configurable to reduce power consumption within a low interference environment. The preferred embodiment of the programmable filter #1 is a variable length finite impulse response (FIR) filter. Samples are clocked into the filter via RxSampleClock 600a and are clocked out of the filter via RxGnssClock 600b. Given the narrow low-pass response, the filter output can be decimated to reduce the processing rate and save power. The decimation rate is software configurable and is set by the ratio of the two clocks. All down-stream processing uses the RxGnssClock clock 600b. This filter inherently rejects out-of-band interference. Using the GPS L1CA example, the filter 332 might be programmed to have a low-pass response with a 3MHz 3dB bandwidth and a decimation rate of at least 2.

The signal level exiting the programmable filter block 332 will be lower than the input due to the low-pass filter response removing out of band signal power. The programmable gain 333 adjusts the signal level so that the input to the programmable filter #2 334 is nearly full-scale. This will maximize the dynamic range of filter #2 334.

The programmable filter #2 334 will typically be configured as a notch filter to remove interference that is in-band to the SOI. The filter order and frequency response are configurable. This filter can be bypassed and shut down to reduce power consumption. The preferred embodiment of the programmable filter #2 is three cascaded second-order auto-regressive moving average (ARMA) filters.

The adaptive Lloyd-Max quantizer (LMQ) 335 is well known by those skilled in the art of direct sequence spread spectrum communications. The LMQ reduces the number of bits per sample to minimize the down-stream logic and power consumption. This process also provides a measure of automatic gain control.

The delay balancer 336 consists of a variable-length sample queue that ensures the processing delay through all channelizer paths are the same regardless of configuration differences such as filter lengths, filter group delays and bypassed blocks.

### GNSS Sample Router:

Referring to Figure 15, the GNSS sample router 340 connects any of its inputs to any number of GNSS measurement blocks. The inputs to the GNSS sample router are the Lloyd-max quantized complex values coming from either a Channelizer 330 or the Sample Formatter and Router output 325. Typically, at this point, all samples are complex Lloyd-max quantized, near baseband, and bandwidth limited, with both out of band and in-band interference reduced or eliminated.

### GNSS Tracking and Measurement:

The GNSS tracking and measurement 350 block diagram is the same as reference 35 within Figure 2, where the local code replica generator is programmed for the specific GNSS SOI. All GNSS tracking and measurement blocks utilize the same RxGnssClock process clock and the same TIC measurement clock. Flexible binding of large, complex correlators such as GPS P-code can be combined as a single satellite GPS L1P and L2P tracking block or used to track two different GPS L2P signals. A typical embodiment will have P = 200 GNSS Tracking and Measurement blocks 350.

### LBand Demodulator:

The LBand Demodulators 360 are well known by those skilled in the art of data communications. Each demodulator can select from all possible input streams 310 or 315. The demodulated data typically consists of GNSS correction information and is used by the Attitude and Navigation Processor 40 to provide centimeter-level global positions. A preferred embodiment will have R=3 LBand Demodulators. Unused demodulators can be powered down.

### Data Bundler:

The Data Bundler 370 aggregates all data to be passed between the GNSS Device 300 and the Attitude and Navigational Processor 40. In one embodiment, the Data Bundler is an address and data processor bus structure that is well known by those skilled in the art. In another embodiment, the Data Bundler is organized to be efficiently accessed via a Direct Memory Access (DMA) scheme.

It will be appreciated that while a particular series of steps or procedures is described as part of the abovementioned process, no order of steps should necessarily be inferred from the order of presentation. For example, the process includes receiving one or more sets of satellite signals. It should be evident the order of receiving the satellite signals is variable and could be reversed without impacting the methodology disclosed herein or the scope of the claims.

It should further be appreciated that while an exemplary partitioning functionality has been provided. It should be apparent to one skilled in the art, that the partitioning could be different. The processes may, for ease of implementation, be integrated into a single unit. Such configuration variances should be considered equivalent and within the scope of the disclosure and claims herein.

It will be appreciated that the use of first and second or other similar nomenclature for denoting similar items is not intended to specify or imply any particular order unless otherwise stated. Furthermore, the use of the terminology "a" and "at least one of' shall each be associated with the meaning "one or more" unless specifically stated otherwise.

The disclosed invention may be embodied in the form of computer-implemented processes and apparatuses for practicing those processes. The present invention can also be embodied in the form of computer program code containing instructions embodied in tangible media, such as floppy diskettes, CD-ROMs, USB drives, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or as data signal transmitted whether a modulated carrier wave or not, over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

While the description has been made with reference to exemplary embodiments, it will be understood by those of ordinary skill in the pertinent art that various changes may be made, and equivalents may be substituted for the elements thereof without departing from the scope of the disclosure. In addition, numerous modifications may be made to adapt the teachings of the disclosure to a particular object or situation without departing from the essential scope thereof. Therefore, it is intended that the Claims not be limited to the particular embodiments disclosed as the currently preferred best modes contemplated for carrying out the teachings herein, but that the Claims shall cover all embodiments falling within the true scope and spirit of the disclosure.

## Claims

1. A GNSS signal processing system for receiving and processing a plurality of GNSS signals to determine a location, orientation, and/or motion characteristic of a body on which the GNSS signal processing system is located, comprising:
a GNSS device comprising first, second, and third analog-to-digital converters configured to digitize received analog GNSS signals in a first, second and third frequency range, respectively, the GNSS device further comprising a channelizer and a GNSS tracking and measurement block coupled to each analog-to-digital converter and configured to extract GNSS signals and track and collect code and carrier-phase measurements for a plurality of digitized GNSS signals within each of the first, second and third frequency ranges;
a first RF down-converter coupled to the GNSS device by first, second and third paths, the down-converter configured to divide and down-convert received RF signals into first, second and third frequency ranges, and communicate the down-converted GNSS signals in the first, second and third frequency ranges, respectively, to the first, second and third analog-to-digital converters of the GNSS device via the first, second and third paths, respectively;
a common oscillator coupled to the GNSS device and first RF down-converter and configured to drive each of them simultaneously;
a first antenna coupled to the first RF down-converter and configured to receive a plurality of GNSS signals in multiple frequency ranges and communicate those signals to the first RF down-converter; and,
a processor coupled to the GNSS device and configured to receive code and carrier-phase measurements for the plurality of digitized GNSS signals and determine at least one of a position or attitude of the signal processing system based on the received code and carrier-phase measurements.

2. The GNSS signal processing system of claim 1, wherein the GNSS device further comprises a fourth analog-to-digital converter configured to digitize received analog signals in a fourth frequency range, wherein the channelizer and a GNSS tracking and measurement block of the GNSS device is coupled to the fourth analog-to-digital converter and configured to extract signals and track and collect code and carrier-phase measurements for the digitized signal within the fourth frequency range , and wherein the first RF down-converter is coupled to the GNSS device by an additional fourth path, the down-converter configured to divide and down-convert received RF signals into a fourth frequency range and communicate the down-converted signals in the fourth frequency range to the fourth analog-to-digital converter of the GNSS device via the fourth path.

3. The GNSS signal processing system of claim 2, wherein the first frequency range is the L1 Band, the second frequency range is the L2 Band, the third frequency range is the L5 band, and the fourth frequency range is the LBand band.

4. The GNSS signal processing system of any one of claims 1 to 3, wherein the analog-to-digital converters are wide-bandwidth, high-speed analog-to-digital converters.

5. The GNSS signal processing system of any one of claims 2 to 4, wherein the fourth path receives data from a GNSS correction service.

6. The GNSS signal processing system of any one of claims 2 to 5, wherein the first RF down-converter is configured to down-convert the signals received in the first antenna into GNSS L1, L2 L5 and LBand unique frequency bands, and to output the down-converted analog signals in separate channels in those unique frequency bands.

7. The GNSS signal processing system of any one of claims 1 to 6 wherein the GNSS code and carrier-phase measurements are collected simultaneously across all frequency bands of the GNSS device.

8. The GNSS signal processing system of any one of claims 1 to 7, wherein unused channels of the plurality of GNSS tracking and measurement channels are configured to be disabled via software to reduce power consumption.

9. The GNSS signal processing system of any one of claims 4 to 8, wherein each wide-bandwidth high-speed analog-to-digital converter has a bandwidth and sample rate sufficient to process at least one of the GNSS L1, GNSS L2, and GNSS L5 bands as one complex analog signal.

10. The GNSS signal processing system of any one of claims 4 to 8, wherein at least one wide-bandwidth high-speed analog-to-digital converter has a bandwidth and sample rate sufficient to process the GNSS L2 and GNSS L5 bands as one complex analog signal.

11. The GNSS signal processing system of any one of claims 1 to 10, wherein the tracking and collecting of the code and carrier-phase measurements takes place responsive to a common TIC.

12. The GNSS signal processing system of any one of claims 1 to 11, wherein the GNSS device further comprises:
fifth, sixth and seventh analog-to-digital converters configured to digitize received analog GNSS signals in the first, second and third frequency range, respectively, the channelizer and GNSS tracking and measurement block coupled to the fifth, sixth and seventh analog-to-digital converter and configured to extract GNSS signals and track and collect code and carrier-phase measurements for a plurality of digitized GNSS signals within each of the first, second and third frequency ranges; the GNSS signal processing system further comprising:
a second RF down-converter coupled to the GNSS device by fifth, sixth and seventh paths, the second down-converter configured to divide and down-convert received RF signals into the first, second and third frequency ranges, and communicate the down-converted GNSS signals in the first, second and third frequency ranges, respectively, to the fifth, sixth and seventh analog-to-digital converters of the GNSS device via the fifth, sixth and seventh paths, respectively, and wherein the common oscillator is coupled to the second RF down-converter and configured to drive the second RF down-converter simultaneously with the first RF down-converter and GNSS device; and,
a second antenna coupled to the second RF down-converter and configured to receive a plurality of GNSS signals in multiple frequency ranges and communicate those signals to the second RF down-converter.

13. The GNSS signal processing system of claim 12, wherein the GNSS device further comprises an eighth analog-to-digital converter configured to digitize received analog signals in the fourth frequency range, wherein the channelizer and a GNSS tracking and measurement block of the GNSS device is coupled to the eighth analog-to-digital converter and configured to extract signals and track and collect code and carrier-phase measurements for the digitized signals within the fourth frequency range , and wherein the second RF down-converter is coupled to the GNSS device by an additional eighth path, the down-converter configured to divide and down-convert received RF signals into the fourth frequency range and communicate the down-converted signals in the fourth frequency range to the eighth analog-to-digital converter of the GNSS device via the eighth path.

14. A GNSS signal processing system for receiving and processing a plurality of GNSS signals to determine a location, orientation, and/or motion characteristic of a body on which the GNSS signal processing system is located, comprising:
a first antenna configured to receive a plurality of GNSS signals in multiple frequency bands including GPS L1CA, Beidou B1, Glonass G1, GPS L2C, Glonass G2, GPS L5, E5ab, Beidou B2B, and LBand;
a first RF down-converter coupled to the first antenna and configured to divide the received RF signals into first, second and third frequency bands and down-convert the RF signals in the first, second and third frequency bands into complex analog signals in the first, second and third frequency bands, respectively, each complex analog signal having an in-phase and quadrature component, and wherein the first frequency band corresponds to the GNSS L1 band, the second frequency band corresponds to the GNSS L2 band, and the third frequency band corresponds to the GNSS L5 band;
a GNSS device having a plurality of programmable analog-to-digital converters configured to convert received analog signals to digital signals, the GNSS device coupled to the first RF down-converter via a first path corresponding to the first frequency band, a second path corresponding to the second frequency band, and a third path corresponding to the third frequency band, wherein each in-phase and quadrature component of each of the complex analog signals is coupled to a separate programmable analog-to-digital converter;
the GNSS device further comprising a channelizer coupled to each programmable analog-to-digital converter and configured to extract GNSS signals from the first frequency band and divide them into GNSS signals in the GPS L1CA, Beidou B1, and Glonass G1 sub-bands of the GNSS L1 band, extract GNSS signals from the second frequency band and divide them into GNSS signals in the GPS L2C and Glonass G2 sub-bands of the GNSS L2 band, extract GNSS signals from the third frequency band and divide them into GNSS signals in the GPS L5, E5ab, Beidou B2B sub-bands of the GNSS L5 band;
the GNSS device further comprising a GNSS tracking and measurement block coupled to the channelizer and configured to track and collect code and carrier-phase measurements for the digitized GNSS signals within each sub-band of the first, second and third frequency ranges;
a common oscillator coupled to the GNSS device and first RF down-converter and configured to drive each of them simultaneously; and,
a processor coupled to the GNSS device and configured to receive code and carrier-phase measurements for the plurality of digitized GNSS signals and determine at least one of a position or attitude of the signal processing system based on the received code and carrier-phase measurements.

15. The GNSS signal processing system of claim 14, wherein the first RF down-converter is further configured to divide the received RF signals into a fourth frequency band and down-convert the RF signals in the fourth band into a down-converted analog signal in the fourth frequency band, wherein the fourth frequency band corresponds to the Lband band, and wherein GNSS device is further coupled to the first RF down-converter via a fourth path corresponding to the fourth frequency band, wherein the fourth signal is coupled to a separate programmable analog-to-digital converter of the GNSS device and converted into a digital Lband signal, and wherein the processor further utilizes the digitized Lband signal to provide augmentation to at least one of a GNSS position or attitude system.

16. The GNSS signal processing system of claim 14 or 15, further comprising:
a second antenna configured to receive a plurality of GNSS signals in multiple frequency bands including GPS L1CA, Beidou B1, Glonass G1, GPS L2C, Glonass G2, GPS L5, E5ab, Beidou B2B, and GPS LBand;
a second RF down-converter coupled to the second antenna and configured to divide the received RF signals into first, second and third frequency bands and down-convert the RF signals in the first, second and third frequency bands into complex analog signals in the first, second and third frequency bands, respectively, each complex analog signal having an in-phase and quadrature component, and wherein the first frequency band corresponds to the GNSS L1 band, the second frequency band corresponds to the GNSS L2 band, and the third frequency band corresponds to the GNSS L5 band, and wherein the GNSS device is coupled to the second RF down-converter via a fifth path corresponding to the first frequency band, a sixth path corresponding to the second frequency band, and a seventh path corresponding to the third frequency band, wherein each in-phase and quadrature component of each of the complex analog signals is coupled to a separate programmable analog-to-digital converter of the GNSS device, and wherein the common oscillator is coupled to the second RF down-converter and configured to drive the first RF down-converter, the second RF down-converter, and the GNSS device.

17. The GNSS signal processing system of claim 16, wherein the second RF down-converter is further configured to divide the received RF signals into an eighth frequency band and down-convert the RF signals in the eighth band into a down-converted analog signal in the eighth frequency band, wherein the eighth frequency band corresponds to the Lband band, and wherein GNSS device is further coupled to the second RF down-converter via an eighth path corresponding to the eighth frequency band, wherein the eighth signal is coupled to a separate programmable analog-to-digital converter of the GNSS device and converted into a digital Lband signal, and wherein the processor further utilizes the digitized GPS Lband signal to provide augmentation to at least one of a position or attitude of the signal processing system.

18. A method for receiving and processing a plurality of GNSS signals in a GNSS signal processing system to determine a location, orientation, and/or motion characteristic of a body on which the GNSS signal processing system is located, comprising:
Receiving GNSS signals in the GPS L1CA, Beidou B1, Glonass G1, GPS L2C, Glonass G2, GPS L5, E5ab, Beidou B2B, and LBand in first and second antennas; Communicating the GNSS signals received in the first antenna to a first RF down-converter coupled to the first antenna, the first RF down-converter dividing the GNSS signals into first, second and third frequency bands and down-converting the divided signals into complex analog signals in the first, second and third frequency bands, respectively, such that each complex analog signal has an in-phase and quadrature component, and wherein the first frequency band corresponds to the GNSS L1 band, the second frequency band corresponds to the GNSS L2 band, and the third frequency band corresponds to the GNSS L5 band;
Communicating the complex analog signals to programmable analog-to-digital converters of a GNSS device coupled to the first RF down-converter via a first path corresponding to the first frequency band, a second path corresponding to the second frequency band, and a third path corresponding to the third frequency band, wherein each in-phase and quadrature component of each of the complex analog signals is coupled to a separate programmable analog-to-digital converter of the GNSS device;
Communicating the GNSS signals received in the second antenna to a second RF down-converter coupled to the second antenna, the second RF down-converter dividing the GNSS signals into first, second and third frequency bands and down-converting the divided signals into complex analog signals in the first, second and third frequency bands, respectively, such that each complex analog signal has an in-phase and quadrature component, and wherein the first frequency band corresponds to the GNSS L1 band, the second frequency band corresponds to the GNSS L2 band, and the third frequency band corresponds to the GNSS L5 band;
Communicating the complex analog signals to programmable analog-to-digital converters of the GNSS device coupled to the second RF down-converter via a fifth path corresponding to the first frequency band, a sixth path corresponding to the second frequency band, and a seventh path corresponding to the third frequency band, wherein each in-phase and quadrature component of each of the complex analog signals is coupled to a separate programmable analog-to-digital converter of the GNSS device, and wherein a common oscillator is coupled to the first RF down-converter, the second RF down-converter, and the GNSS device;
converting, in the analog-to-digital converters of the GNSS device, the complex analog signals to digital signals in the first, second, and third frequency bands, respectively, wherein each programmable analog-to-digital converter is coupled to a channelizer of the GNSS device and configured to provide the digitized signals in the first, second and third frequency bands to the channelizer;
extracting, in the channelizer, GNSS signals from the first frequency band and dividing them, in the channelizer, into GNSS signals in the GPS L1CA, Beidou B1, and Glonass G1 sub-bands of the GNSS L1 band, extracting, in the channelizer, GNSS signals from the second frequency band and dividing them, in the channelizer, into GNSS signals in the GPS L2C and Glonass G2 sub-bands of the GNSS L2 band, and extracting, in the channelizer, GNSS signals from the third frequency band and dividing them, in the channelizer, into GNSS signals in the GPS L5, E5ab, Beidou B2B sub-bands of the GNSS L5 band, wherein the common oscillator is configured to drive the first RF down-converter, second RF down-converter and the GNSS device simultaneously;
tracking and collecting code and carrier-phase measurements for the digitized GNSS signals within each sub-band of the first, second and third frequency ranges in a GNSS tracking and measurement block of the GNSS device that is coupled to the channelizer; and,
providing the code and carrier-phase measurements for the plurality of digitized GNSS signals to a processor coupled to the GNSS device and determining, in the processor, at least one of a position or attitude of the signal processing system based on the received code and carrier-phase measurements.

19. The method of claim 18, wherein the step of collecting code and carrier-phase measurements for the digitized GNSS signals within each sub-band of the first, second and third frequency ranges in a GNSS tracking and measurement block of the GNSS device that is coupled to the channelizer occurs simultaneously across the first, second and third frequency ranges based on a common TIC signal.

20. The method of claim 18 or 19, further comprising the steps of:
in the first RF down-converter, dividing the GNSS signals into an additional fourth frequency band, namely the LBand, and down-converting the signals in the GNSS LBand into down-converted analog signals in the LBand;
Communicating the down-converted analog signals in the LBand to a programmable analog-to-digital converter of the GNSS device coupled to the first RF down-converter via an additional fourth path corresponding to the LBand;
in the second RF down-converter, dividing the GNSS signals into the LBand and down-converting the signals in the LBand into down-converted analog signals in the GNSS LBand;
Communicating the down-converted analog signals in the LBand to a programmable analog-to-digital converter of the GNSS device coupled to the second RF down-converter via an additional eighth path corresponding to the LBand;
converting, in the analog-to-digital converters of the GNSS device, the down-converted analog signals in the LBand to digitized signals in the LBand;
providing the digitized LBand signals to the processor, and utilizing the digitized Lband signals, in the processor, to provide augmentation to at least one of a position or attitude of the signal processing system.

21. The method of claim 20, wherein the step of collecting code and carrier-phase measurements for the digitized GNSS signals within each sub-band of the first, second and third frequency ranges in a GNSS tracking and measurement block of the GNSS device that is coupled to the channelizer occurs simultaneously across the first, second and third frequency ranges based on a common TIC signal.

22. The method of claim 20 or 21, wherein the digitized LBand signal encompasses an Inmarsat signal.

23. The method of any one of claims 20 to 22, wherein the digitized LBand signal contains a GNSS augmentation signal.
